# EUROPÄISCHE PATENTSCHRIFT

(11) **EP 3 080 474 B1**
(45) Veröffentlichungstag und Bekanntmachung des Hinweises auf die Patenterteilung: **07.08.2019**
(21) Anmeldenummer: 14809592.0
(22) Anmeldetag: 27.11.2014
(51) Int. Cl.: F16D 55/28, F16D 59/02

(54) **ELEKTROMAGNETISCH BETÄTIGBARE BREMSANORDNUNG UND ELEKTROMOTOR MIT EINER BREMSANORDNUNG**
ELECTROMAGNETICALLY ACTUATED BRAKE ASSEMBLY, AND ELECTRIC MOTOR COMPRISING A BRAKE ASSEMBLY
SYSTÈME DE FREINAGE À COMMANDE ÉLECTROMAGNÉTIQUE ET MOTEUR ÉLECTRIQUE MUNI D'UN SYSTÈME DE FREINAGE

(30) Priorität: 11.12.2013 DE 102013020524
(43) Veröffentlichungstag der Anmeldung: 19.10.2016
(73) Patentinhaber: SEW-EURODRIVE GmbH & Co. KG, 76646 Bruchsal (DE)
(72) Erfinder: HUFNAGEL, Timo, 75031 Eppingen (DE); ASCHOFF, Stefan, 64297 Darmstadt (DE)
(86) Internationale Anmeldenummer: PCT/EP2014/003171
(87) Internationale Veröffentlichungsnummer: WO 2015/086117

(56) Entgegenhaltungen:
- DE-A1- 19 646 493
- DE-C1- 19 622 983
- DE-U1- 29 706 124
- US-A- 5 421 436

## Beschreibung

Die Erfindung betrifft eine elektromagnetisch betätigbare Bremsanordnung und ein Elektromotor mit einer Bremsanordnung.

Es ist allgemein bekannt, dass beim Betrieb, insbesondere beim Lüften und Einfallen, einer elektromagnetisch betätigbaren Bremse Geräuschemissionen auftreten.

Aus der DE 297 06 124 U1 ist als nächstliegender Stand der Technik eine Federdruckbremse bekannt.

Aus der DE 196 22 983 C1 ist eine elektromagnetisch betätigbare Bremse bekannt.

Aus der DE 196 46 493 A1 ist eine Einrichtung zur Geräuschdämpfung bei mechanischen Bremsen bekannt.

Aus der US 5 421 436 A ist ein orientierungsfreier Bremsmechanismus bekannt.

Der Erfindung liegt daher die Aufgabe zugrunde, eine Bremse mit verringerter Geräuschemission auszubilden.

Erfindungsgemäß wird die Aufgabe bei der elektromagnetisch betätigbaren Bremsanordnung nach den in Anspruch 1 und bei dem Elektromotor mit einer Bremsanordnung nach den in Anspruch 10 angegebenen Merkmalen gelöst.

Wichtige Merkmale der Erfindung bei der Vorrichtung und ein Verfahren sind, dass die elektromagnetisch betätigbare Bremsanordnung mit
- einer Ankerscheibe,
- einer Welle,
- einer Spulenwicklung und
- einem Spulenkern,
vorgesehen ist,
**wobei** die Ankerscheibe an ihrer dem Spulenkern zugewandten Seite Dämpfungsringe aufweist, deren Außendurchmesser kleiner ist als der Radialabstand zur Wellenachse der von der Bremsanordnung abzubremsenden Welle,
wobei ein oder mehrere Abstandsmittel an der Ankerscheibe angeordnet sind, insbesondere formschlüssig und/oder kraftschlüssig mit der Ankerscheibe verbunden sind.

Von Vorteil ist dabei, dass im Betrieb der Bremse, also insbesondere beim Lüften oder Einfallen der Bremse, mittels der Dämpfungsringe eine Geräuschemission reduzierbar ist. Außerdem ist mittels der Abstandsmittel eine direkte Berührung der Ankerscheibe mit dem Spulenkern vermeidbar und somit ein flächiges Aufeinanderschlagen der beiden Teile verhinderbar. Dadurch ist eine weitere Reduktion der Geräuschemission reduzierbar.

gemäß Anspruch 1 weist das jeweilige Abstandsmittel, insbesondere ein jeweiliger Schenkelabschnitt, eine in eine jeweilige Vertiefung, insbesondere Sacklochbohrung, der Ankerscheibe zumindest teilweise hinein ragende Erhebung auf. Von Vorteil ist dabei, dass das Abstandsmittel fixierbar ist an der Ankerscheibe. Dabei ist die radiale Länge des jeweiligen Schenkelabschnitts derart gewählt, dass der Jochabschnitt den Umfang der Ankerscheibe zumindest teilweise berührt und somit eine Geräuschreduktion erreichbar ist.

Bei einer vorteilhaften Ausgestaltung ist das Abstandsmittel ein Blechteil, insbesondere ein Stanz-Biegeteil. Von Vorteil ist dabei, dass eine einfache Herstellung ermöglicht ist.

Bei einer vorteilhaften Ausgestaltung weist das Abstandsmittels zwei über ein Jochabschnitt verbundene Schenkelabschnitte auf, wobei die Schenkelabschnitte an die Ankerscheibe angedrückt, insbesondere elastisch vorgespannt sind,
insbesondere wobei der von dem Abstandsmittel überdeckte axiale Bereich den von der Ankerscheibe überdeckten axialen Bereich umfasst und/oder wobei ein jeweiliger Schenkelabschnitt an eine jeweilige Stirnseite der Ankerscheibe angedrückt ist, Von Vorteil ist dabei, dass das Abstandsmittel den Rand der Ankerscheibe umfasst und sich somit andrückt und hält.

Bei einer vorteilhaften Ausgestaltung sind die Dämpfungsringe außermittig zur Wellenachse angeordnet und/oder sind in Umfangsrichtung vorzugsweise regelmäßig beabstandet. Von Vorteil ist dabei, dass auch beim Aufschlagen eine stabile Lage der Ankerscheibe erreichbar ist. Denn durch den großen Radialabstand der Dämpfungsringe wird eine verbesserte Stabilere Lage erreicht, auch wenn durch den Aufschlag Taumel-Schwingungen der Ankerscheibe angeregt werden.

Bei einer vorteilhaften Ausgestaltung überlappt der von dem jeweiligen Dämpfungsring überdeckte Radialabstandsbereich mit dem von einem jeweiligen Abstandsmittel überdeckten Radialabstandsbereich. Von Vorteil ist dabei, dass die Beabstandung durch die Abstandsmittel im Bereich der Dämpfungsringe angeordnet ist und somit eine stabile Anschlagslage der Ankerscheibe erreichbar ist.

Bei einer vorteilhaften Ausgestaltung weist die Ankerscheibe Vertiefungen zur Aufnahme der Dämpfungsringe auf,
insbesondere wobei ein jeweiliger Dämpfungsring in einer jeweiligen Ringnut der Ankerscheibe aufgenommen ist, insbesondere an der dem Spulenkern zugewandten axialen Stirnseite der Ankerscheibe. Von Vorteil ist dabei, dass die Fixierung der Dämpfungsringe in einfacher Weise ausführbar ist. Vorzugsweise ist der Arbeitsweg der Ankerscheibe relativ zum Spulenkern zwischen dem Lüften und Einfallen nur derart klein, dass die Dämpfungsringe jeweils ständig den Spulenkern und die Ankerscheibe berühren. Der Arbeitsweg ist also kleiner als der elastische Arbeitsbereich der Dämpfungsringe. Insbesondere ist der Arbeitsweg kleiner als der Radius des Ringquerschnitts.

Bei einer vorteilhaften Ausgestaltung ist ein jeweiliger Dämpfungsring aus einem Elastomer gefertigt
und/oder
in Umfangsrichtung ist zwischen zwei zueinander nächstbenachbarten Dämpfungsringen ein jeweiliges Abstandsmittel angeordnet ist,
insbesondere wobei die Dämpfungsringe voneinander in Umfangsrichtung regelmäßig beabstandet sind und/oder die Abstandsmittel in Umfangsrichtung regelmäßig voneinander beabstandet sind. Von Vorteil ist dabei, dass eine stabilisierte Lage beim Aufschlagen erreichbar ist.

Bei einer vorteilhaften Ausgestaltung ist ein eine Bremsfläche aufweisendes Gehäuseteil mittels Bolzen mit dem die als Ringwicklung ausgeführte Spulenwicklung in einer Vertiefung aufnehmenden Spulenkern verbunden,
wobei die Ankerscheibe spielarm oder spielbehaftet drehfest, aber axial bewegbar, mit dem Spulenkern und/oder den Bolzen verbunden ist,
wobei das Gehäuseteil ein Lager der Welle aufnimmt,
wobei ein Bremsbelagträger mit der Welle drehfest, aber axial verschiebbar, verbunden ist,
wobei der Bremsbelagträger axial zwischen Ankerscheibe und Bremsfläche des Gehäuseteils angeordnet ist, wobei die Ankerscheibe axial zwischen Bremsbelagträger und Spulenkern angeordnet ist,
insbesondere wobei die Ankerscheibe von Federelementen beaufschlagt ist, deren Federkraft vom Spulenkern weg gerichtet ist und/oder die die Ankerscheibe vom Spulenkern wegdrücken. Von Vorteil ist dabei, dass eine einfach herstellbare Bremse für die Erfindung anwendbar ist.

Bei einer vorteilhaften Ausgestaltung weist der Bremsbelagträger eine Innenverzahnung auf, die im Eingriff steht mit einer Außenverzahnung der Welle
und/oder dass der Bremsbelagträger axial beidseitig einen jeweiligen Bremsbelag aufweist. Von Vorteil ist dabei, dass eine einfache axiale Bewegbarkeit und in Umfangsrichtung eine drehfeste Verbindung ausführbar ist.

Wichtige Merkmale bei dem Elektromotor mit einer Bremsanordnung sind, dass die Welle der Bremsanordnung die Rotorwelle des Motors ist und/oder das Gehäuseteil ein Flanschteil des Motors, insbesondere in welcher eines der Lager der Rotorwelle aufgenommen ist.

Von Vorteil ist dabei, dass eine einfache Herstellung ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

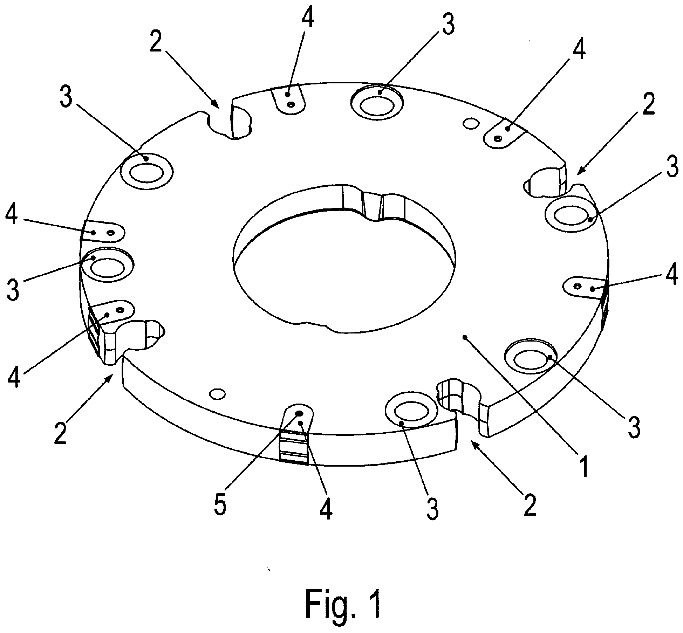

In der Figur 1 ist eine erfindungsgemäße Ankerscheibe 1 in Schrägansicht gezeigt, wobei am Umfang der Ankerscheibe 1 in Umfangsrichtung voneinander beabstandet Abstandsmittel 4 angeordnet sind.

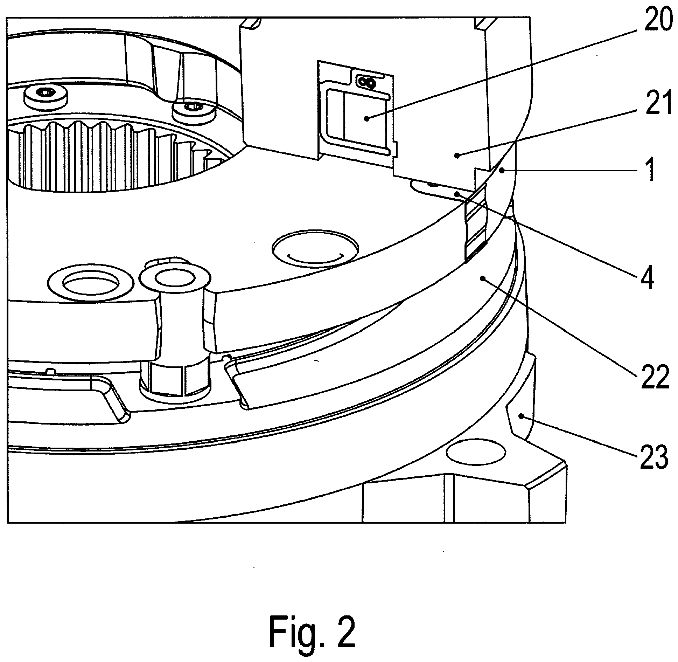

In der Figur 2 ist eine Ankerscheibe 1 in einer erfindungsgemäßen elektromagnetisch betätigbaren Bremse gezeigt.

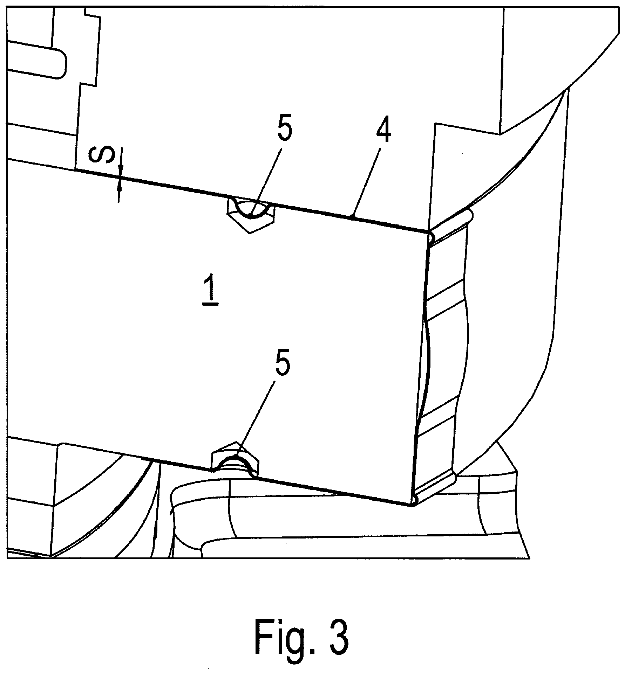

In der Figur 3 ist ein Querschnitt durch die Ankerscheibe 1 mit einem Abstandsmittel 4 gezeigt.

Wie in den Figuren gezeigt, weist die erfindungsgemäße elektromagnetisch betätigbare Bremse eine Ankerscheibe 1 auf, an deren Umfang, insbesondere an deren äußeren Rand, Abstandsmittel 4 angeordnet sind. Diese sind in Umfangsrichtung voneinander beabstandet, insbesondere regelmäßig voneinander beabstandet.

Jedes Abstandsmittel 4 ist als Blechteil ausgeführt, das als Stanz-Biegeteil gefertigt ist.

Die Wandstärke des Blechteils ist im Wesentlichen konstant.

Das Abstandsmittel 4 ist als U-förmige Klammer geformt, und somit elastisch ausgelenkt, so dass die Schenkel des U sich an den beiden axialen Stirnseiten kraftschlüssig verbinden, insbesondere anklammern.

Jeder Schenkel weist eine Erhebung 5 auf, die zur Ankerscheibe hin gerichtet ausgeformt ist und in eine Sacklochbohrung der Ankerscheibe hineinragt.

Die Stirnseiten der Ankerscheibe 1 sind plan ausgeführt, wobei die Sacklochbohrungen zur Aufnahme der Erhebung 5 und jeweilige Ringnuten zur Aufnahme von Dämpfungsringen 3 als Vertiefungen in der planen Stirnseite der Ankerscheibe 1 eingebracht sind.

Die Dämpfungsringe 3 sind aus einem Elastomer ausgeführt.

Die Bremse weist eine zum Gehäuseteil 23 drehbar gelagerte Welle auf. Das Gehäuseteil 23 ist mittels Bolzen mit einem Spulenkern 21 verbunden, in dem eine als Ringwicklung ausgeführte Spulenwicklung 20 aufgenommen ist.

Der Spulenkern 21 ist aus einem ferromagnetischen Material, insbesondere aus einem GGG Sphärogussmaterial oder Ferrit.

Die Ankerscheibe 1 weist Ausnehmungen 2 für die Bolzen auf und ist somit axial, also in Wellenachsrichtung, geführt. Die Ankerscheibe 1 ist somit im Wesentlichen drehfest mit dem Spulenkern 21 verbunden und axial bewegbar.

Ein Bremsbelagträger ist drehfest aber axial bewegbar mit der Welle verbunden. Hierzu weist der Bremsbelagträger eine Innenverzahnung auf und die Welle eine entsprechende Außenverzahnung auf.

Der Bremsbelagträger weist axial beidseitig einen Bremsbelag auf.

Der Bremsbelag ist axial zwischen dem Gehäuseteil 23 und der Ankerscheibe 1 angeordnet. Die Ankerscheibe 1 ist axial zwischen dem Bremsbelagträger 22 und dem Spulenkern 21 angeordnet.

An dem Spulenkern 21 abgestützte Federelemente drücken auf die Ankerscheibe, so dass diese axial weggedrückt wird von dem Spulenkern 21.

Bei Bestromung der ,Spulenwicklung 20 wird die Ankerscheibe 1 entgegen der von den Federelementen erzeugten Federkraft zum Spulenkern 21 hin gezogen. Der Aufschlag der Ankerscheibe 1 auf den Spulenkern 21 ist gedämpft mittels der Dämpfungsringe 3, da diese zwar in jeweiligen Ringnuten der Ankerscheibe aufgenommen sind, aber axial zum Spulenkern 21 axial hervorragen und somit vor der Berührung der Ankerscheibe 1 mit dem Spulenkern 21 schon in Kontakt kommen mit dem Spulenkern 21.

Zur sicheren Beabstandung der Ankerscheibe 1 vom Spulenkern 21 sind die Abstandsmittel 4 zwischen der Ankerscheibe 1 und dem Spulenkern 21 angeordnet. Somit ist eine direkte Berührung der Ankerscheibe 1 mit dem Spulenkern 21 verhindert, da auch bei starkem Verquetschen der Dämpfungsringe 3 ein Restluftspalt durch die Wandstärke der Abstandsmittel 4 definiert ist. Dabei ist der Restluftspalt radial und in Umfangsrichtung außerhalb von der Berührfläche zwischen Abstandsmittel 4 und Ankerscheibe 1 angeordnet.

Bei Nichtbestromung der Spulenwicklung drücken die Federelemente die Ankerscheibe 1 von dem Spulenkern weg, so dass die Ankerscheibe 1 auf den Bremsbelagträger 22 drückt und dieser auf das Gehäuseteil 23 gedrückt wird. Somit erfolgt ein Reibkontakt zwischen einem der Ankerscheibe zugewandten Bremsbelag des Bremsbelagträgers mit der Ankerscheibe und einem von der Ankerscheibe abgewandten Bremsbelag des Bremsbelagträgers mit einer auf dem Gehäuseteil vorgesehenen Bremsfläche.

Mittels der Erhebung 5, welche axial zumindest teilweise hineinragt in die Vertiefung, wie Sacklochbohrung, ist das Abstandsmittel 4 in radialer und in Umfangsrichtung formschlüssig verbunden mit der Ankerscheibe 1. Denn beim Anziehen der Ankerscheibe 1 zum Spulenkern 21 hin wird ein Mindestabstand, welcher der Wandstärke des Abstandsmittels 4 entspricht, eingehalten. Dabei ist die Wandstärke in axialer Richtung gemessen und das Abstandsmittel 4 ist derart geformt, dass es im Wesentlichen plan an der Stirnfläche der Ankerscheibe 1 anliegt und an der anderen Seite plan am Spulenkern 21 anliegt.

Die Dämpfungsringe 3 sind derart ausgerichtet, dass die Ringachse in axialer Richtung ausgerichtet ist. Der Außendurchmesser des Dämpfungsrings ist kleiner als der Radialabstand des Mittelpunktes des Dämpfungsrings 3 zur Wellenachse der Welle der Bremse. Somit ist der jeweilige Dämpfungsring 3 außermittig zur Wellenachse angeordnet. Auf diese Weise ist nur ein Raumbereich mit etwas Luft beim Aufschlagen der Ankerscheibe 1 auf den Spulenkern 21 eingeschlossen, also begrenzt durch die Ankerscheibe 1, den Spulenkern 21 und den Dämpfungsring 3. Somit wird auch durch diese Luft ein weiteres Quetschen des Dämpfungsrings 3 etwas erschwert. Die Luft ist dabei abgedichtet mittels des Dämpfungsrings 3. Die Kontaktfläche zwischen Dämpfungsring und Spulenkern 21 ist ebenfalls eben, also plan, ausgeführt.

In Umfangsrichtung sind die Dämpfungsringe 3 vorzugsweise regelmäßig voneinander beabstandet und/oder auf demselben Radialabstand zur Wellenachse angeordnet.

### Bezugszeichenliste

1 Ankerscheibe
2 Ausnehmung für Führungsbolzen
3 Dämpfungsring
4 Abstandsmittel
5 Erhebung
20 Spulenwicklung
21 Spulenkern
22 Bremsbelagträger mit Bremsbelag
23 Gehäuseteil

## Patentansprüche

1. Elektromagnetisch betätigbare Bremsanordnung mit
- einer Ankerscheibe (1),
- einer Welle,
- einer Spulenwicklung (20) und
- einem Spulenkern (21),
**wobei** die Ankerscheibe (1) an ihrer dem Spulenkern (21) zugewandten Seite Dämpfungsringe (3) aufweist, deren Außendurchmesser kleiner ist als der Radialabstand zur Wellenachse der von der Bremsanordnung abzubremsenden Welle,
wobei ein oder mehrere Abstandsmittel (4) an der Ankerscheibe (1) angeordnet sind, insbesondere formschlüssig und/oder kraftschlüssig mit der Ankerscheibe (1) verbunden sind,
**dadurch gekennzeichnet, dass**
das jeweilige Abstandsmittel (4), insbesondere ein jeweiliger Schenkelabschnitt, eine in eine jeweilige Vertiefung, insbesondere Sacklochbohrung, der Ankerscheibe (1) zumindest teilweise hinein ragende Erhebung (5) aufweist.

2. Bremsanordnung nach Anspruch 1,
**dadurch gekennzeichnet, dass**
das Abstandsmittel (4) ein Blechteil ist, insbesondere ein Stanz-Biegeteil.

3. Bremsanordnung nach mindestens einem der vorangegangenen Ansprüche,
**dadurch gekennzeichnet, dass**
das Abstandsmittels (4) zwei über ein Jochabschnitt verbundene Schenkelabschnitte aufweist, wobei die Schenkelabschnitte an die Ankerscheibe (1) angedrückt, insbesondere elastisch vorgespannt sind,
insbesondere wobei der von dem Abstandsmittel (4) überdeckte axiale Bereich den von der Ankerscheibe (1) überdeckten axialen Bereich umfasst und/oder wobei ein jeweiliger Schenkelabschnitt an eine jeweilige Stirnseite der Ankerscheibe (1) angedrückt ist,

4. Bremsanordnung nach mindestens einem der vorangegangenen Ansprüche,
**dadurch gekennzeichnet, dass**
die Dämpfungsringe (3) außermittig zur Wellenachse angeordnet sind und/oder in Umfangsrichtung vorzugsweise regelmäßig beabstandet sind.

5. Bremsanordnung nach mindestens einem der vorangegangenen Ansprüche,
**dadurch gekennzeichnet, dass**
der von dem jeweiligen Dämpfungsring (3) überdeckte Radialabstandsbereich mit dem von einem jeweiligen Abstandsmittel (4) überdeckten Radialabstandsbereich überlappt.

6. Bremsanordnung nach mindestens einem der vorangegangenen Ansprüche,
**dadurch gekennzeichnet, dass**
die Ankerscheibe (1) Vertiefungen zur Aufnahme der Dämpfungsringe (3) aufweist, insbesondere wobei ein jeweiliger Dämpfungsring (3) in einer jeweiligen Ringnut der Ankerscheibe (1) aufgenommen ist, insbesondere an der dem Spulenkern (21) zugewandten axialen Stirnseite der Ankerscheibe (1).

7. Bremsanordnung nach mindestens einem der vorangegangenen Ansprüche,
**dadurch gekennzeichnet, dass**
ein jeweiliger Dämpfungsring (3) aus einem Elastomer gefertigt ist
und/oder
dass in Umfangsrichtung zwischen zwei zueinander nächstbenachbarten Dämpfungsringen (3) ein jeweiliges Abstandsmittel (4) angeordnet ist,
insbesondere wobei die Dämpfungsringe (3) voneinander in Umfangsrichtung regelmäßig beabstandet sind und/oder die Abstandsmittel (4) in Umfangsrichtung regelmäßig voneinander beabstandet sind.

8. Bremsanordnung nach mindestens einem der vorangegangenen Ansprüche,
**dadurch gekennzeichnet, dass**
ein eine Bremsfläche aufweisendes Gehäuseteil (23) mittels Bolzen mit dem die als Ringwicklung ausgeführte Spulenwicklung (20) in einer Vertiefung aufnehmenden Spulenkern (21) verbunden ist,
wobei die Ankerscheibe (1) spielarm oder spielbehaftet drehfest, aber axial bewegbar, mit dem Spulenkern (21) und/oder den Bolzen verbunden ist,
wobei das Gehäuseteil (23) ein Lager der Welle aufnimmt,
wobei ein Bremsbelagträger (22) mit der Welle drehfest, aber axial verschiebbar, verbunden ist,
wobei der Bremsbelagträger (22) axial zwischen Ankerscheibe (1) und Bremsfläche des Gehäuseteils (23) angeordnet ist, wobei die Ankerscheibe (1) axial zwischen Bremsbelagträger (22) und Spulenkern (21) angeordnet ist,
insbesondere wobei die Ankerscheibe (1) von Federelementen beaufschlagt ist, deren Federkraft vom Spulenkern (21) weg gerichtet ist und/oder die die Ankerscheibe (1) vom Spulenkern (21) wegdrücken.

9. Bremsanordnung nach Anspruch 8, **dadurch gekennzeichnet, dass**
der Bremsbelagträger (22) eine Innenverzahnung aufweist, die im Eingriff steht mit einer Außenverzahnung der Welle
und/oder dass der Bremsbelagträger (22) axial beidseitig einen jeweiligen Bremsbelag aufweist

10. Elektromotor mit einer Bremsanordnung nach mindestens einem der vorangegangenen Ansprüche,
**dadurch gekennzeichnet, dass**
die Welle der Bremsanordnung die Rotorwelle des Motors ist und/oder das Gehäuseteil (23) ein Flanschteil des Motors, insbesondere in welcher eines der Lager der Rotorwelle aufgenommen ist.

## Claims

1. Electromagnetically operable brake assembly, comprising
- an armature disc (1),
- a shaft
- a coil winding (20) and
- a coil core (21),
wherein, on its side facing the coil core (21), the armature disc (1) has damping rings (3), the external diameter of which is smaller than the radial distance from the shaft axis of the shaft to be braked by the brake assembly,
wherein one or more spacers (4) are arranged on the armature disc (1), in particular are connected to the armature disc (1) in an interlocking and/or frictional manner,
**characterised in that**
each spacer (4), in particular each leg portion, has a projection (5) that protrudes at least partly into a respective recess, in particular a blind hole, in the armature disc (1).

2. Brake assembly according to claim 1,
**characterised in that**
the spacer (4) is a sheet metal part, in particular a punched bent part.

3. Brake assembly according to at least one of the preceding claims,
**characterised in that**
the spacer (4) has two leg portions connected by means of a yoke portion, wherein the leg portions are pressed against the armature disc (1), in particular are resiliently preloaded, in particular wherein the axial region covered by the spacer (4) encompasses the axial region covered by the armature disc (1) and/or wherein a particular leg portion is pressed against a particular end face of the armature disc (1).

4. Brake assembly according to at least one of the preceding claims,
**characterised in that**
the damping rings (3) are arranged eccentrically with respect to the shaft axis and/or are preferably regularly spaced apart in the circumferential direction.

5. Brake assembly according to at least one of the preceding claims,
**characterised in that**
the radial distance region covered by a particular damping ring (3) overlaps the radial distance region covered by a particular spacer (4).

6. Brake assembly according to at least one of the preceding claims,
**characterised in that**
the armature disc (1) has recesses for receiving the damping rings (3),
in particular wherein a particular damping ring (3) is received in a particular annular groove in the armature disc (1), in particular on the axial end face, facing the coil core (21), of the armature disc (1).

7. Brake assembly according to at least one of the preceding claims,
**characterised in that**
a particular damping ring (3) is made of an elastomer,
and/or
**in that** one spacer (4) is arranged in the circumferential direction between two adjacent damping rings (3),
in particular wherein the damping rings (3) are regularly spaced apart from one another in the circumferential direction and/or **in that** the spacers (4) are regularly spaced apart from one another in the circumferential direction.

8. Brake assembly according to at least one of the preceding claims,
**characterised in that**
a housing part (23) having a braking surface is connected by means of bolts to the coil core (21), which receives the coil winding (20), configured as an annular winding, in a recess,
wherein the armature disc (1) is connected to the coil core (21) and/or to the bolts in a rotationally fixed but axially movable manner either with or without backlash,
wherein the housing part (23) receives a bearing of the shaft,
wherein a brake lining carrier (22) is connected to the shaft in a rotationally fixed but axially displaceable manner,
wherein the brake lining carrier (22) is arranged axially between the armature disc (1) and the braking surface of the housing part (23), wherein the armature disc (1) is arranged axially between the brake lining carrier (22) and the coil core (21),
in particular wherein the armature disc (1) is acted on by spring elements, the spring force of which is directed away from the coil core (21) and/or which push the armature disc (1) away from the coil core (21).

9. Brake assembly according to claim 8,
**characterised in that**
the brake lining carrier (22) has inner teeth that engage with outer teeth on the shaft and/or **in that** the brake lining carrier (22) has one brake lining on each axial side.

10. Electric motor comprising a brake assembly according to at least one of the preceding claims,
**characterised in that**
the shaft of the brake assembly is the rotor shaft of the motor and/or the housing part (23) is a flange part of the motor, in particular in which one of the bearings of the rotor shaft is received.

## Revendications

1. Ensemble de freinage actionnable électromagnétiquement, comprenant
- un disque d'induit (1),
- un arbre,
- un enroulement (20) de bobine et
- un noyau (21) de bobine,
le disque d'induit (1) étant muni, sur son côté tourné vers le noyau (21) de la bobine, de bagues d'amortissement (3) dont le diamètre extérieur est inférieur à la distance radiale par rapport à l'axe de l'arbre devant être freiné par ledit ensemble de freinage,
un ou plusieurs moyen(s) d'espacement (4) étant disposé(s) sur ledit disque d'induit (1) et étant, en particulier, relié(s) audit disque d'induit (1) par complémentarité de formes et/ou par engagement positif,
**caractérisé par le fait que**
le moyen d'espacement (4) considéré, notamment un segment de branche respectif, est pourvu d'une zone proéminente (5) pénétrant, au moins en partie, à l'intérieur d'un renfoncement respectif se présentant, en particulier, comme un perçage borgne du disque d'induit (1).

2. Ensemble de freinage selon la revendication 1,
**caractérisé par le fait que**
le moyen d'espacement (4) est une pièce en tôle, notamment une pièce estampée et pliée.

3. Ensemble de freinage selon au moins l'une des revendications précédentes,
**caractérisé par le fait que**
le moyen d'espacement (4) comporte deux segments de branches reliés par l'intermédiaire d'un segment d'entretoisement, lesdits segments de branches étant pressés, notamment précontraints élastiquement contre le disque d'induit (1),
sachant, en particulier, que la région axiale recouverte par ledit moyen d'espacement (4) inclut la région axiale recouverte par ledit disque d'induit (1), et/ou sachant qu'un segment de branche considéré est pressé contre une face extrême respective dudit disque d'induit (1).

4. Ensemble de freinage selon au moins l'une des revendications précédentes,
**caractérisé par le fait que**
les bagues d'amortissement (3) occupent des positions excentrées par rapport à l'axe de l'arbre et/ou sont, de préférence, régulièrement espacées dans le sens périphérique.

5. Ensemble de freinage selon au moins l'une des revendications précédentes,
**caractérisé par le fait que**
la région à espacement radial, recouverte par la bague d'amortissement (3) considérée, se chevauche avec la région à espacement radial recouverte par un moyen d'espacement (4) respectif.

6. Ensemble de freinage selon au moins l'une des revendications précédentes,
**caractérisé par le fait que**
le disque d'induit (1) est doté de renfoncements destinés à recevoir les bagues d'amortissement (3),
sachant notamment qu'une bague d'amortissement (3) considérée est logée dans une rainure annulaire respective dudit disque d'induit (1), en particulier à la face extrême axiale dudit disque d'induit (1) qui est tournée vers le noyau (21) de la bobine.

7. Ensemble de freinage selon au moins l'une des revendications précédentes,
**caractérisé par le fait**
**qu'**une bague d'amortissement (3) considérée est fabriquée en un élastomère ;
et/ou par le fait
**qu'**un moyen d'espacement (4) respectif est interposé, dans le sens périphérique, entre deux bagues d'amortissement (3) les plus proches l'une de l'autre,
sachant notamment que les bagues d'amortissement (3) sont mutuellement espacées de façon régulière, dans le sens périphérique, et/ou que les moyens d'espacement (4) sont régulièrement espacés les uns des autres dans le sens périphérique.

8. Ensemble de freinage selon au moins l'une des revendications précédentes,
**caractérisé par le fait**
**qu'**une partie de carter (23) pourvue d'une surface de freinage est reliée, au moyen de boulons, au noyau (21) de la bobine qui reçoit, dans un renfoncement, l'enroulement (20) de ladite bobine réalisé sous la forme d'un enroulement annulaire,
le disque d'induit (1) étant relié audit noyau (21) de la bobine et/ou auxdits boulons, avec verrouillage rotatif présentant un faible jeu ou affecté d'un jeu, mais toutefois avec mobilité axiale,
sachant que ladite partie de carter (23) reçoit un palier de l'arbre,
un support (22) de garnitures de freinage étant relié audit arbre avec verrouillage rotatif, mais cependant avec faculté de coulissement axial,
ledit support (22) de garnitures de freinage étant interposé axialement entre le disque d'induit (1) et la surface de freinage de ladite partie de carter (23), lequel disque d'induit (1) est interposé axialement entre ledit support (22) de garnitures de freinage et ledit noyau (21) de la bobine,
sachant notamment que le disque d'induit (1) est sollicité par des éléments élastiques dont la force élastique est dirigée à l'écart du noyau (21) de la bobine, et/ou qui repoussent ledit disque d'induit (1) en l'éloignant dudit noyau (21) de la bobine.

9. Ensemble de freinage selon la revendication 8,
**caractérisé par le fait que**
le support (22) de garnitures de freinage est muni d'une denture intérieure en prise avec une denture extérieure de l'arbre ;
et/ou **par le fait que** ledit support (22) de garnitures de freinage comporte une garniture de freinage respective de part et d'autre, dans le sens axial.

10. Moteur électrique équipé d'un ensemble de freinage conforme à au moins l'une des revendications précédentes,
**caractérisé par le fait que**
l'arbre de l'ensemble de freinage est l'arbre rotorique du moteur, et/ou la partie de carter (23) est une partie de bridage dudit moteur dans laquelle, en particulier, l'un des paliers dudit arbre rotorique est logé.
